# EUROPEAN PATENT SPECIFICATION

(11) **EP 2 709 457 B1**
(45) Date of publication and mention of the grant of the patent: **02.08.2017**
(21) Application number: 12724770.8
(22) Date of filing: 16.05.2012
(51) Int. Cl.: A21C 13/00

(54) **DEVICE FOR SUPPORTING DOUGH PORTIONS AND AN ASSEMBLY FOR DOUGH TREATMENT COMPRISING SUCH A DEVICE**
VORRICHTUNG ZUR UNTERSTÜTZUNG VON TEIGPORTIONEN UND ANORDNUNG ZUR TEIGBEHANDLUNGSGERÄT MIT EINER SOLCHEN VORRICHTUNG
DISPOSITIF DE SUPPORT DE PORTIONS DE PÂTE ET ENSEMBLE DE TRAITEMENT D'UNE PÂTE COMPRENANT UN TEL DISPOSITIF

(30) Priority: 17.05.2011 NL 2006797
(43) Date of publication of application: 26.03.2014
(73) Proprietor: Kaak, Johan Hendrik Bernard, 7011 DZ Gaanderen (NL)
(72) Inventor: NIJKAMP, Gerrit Jan Herman, NL-7061 GA Terborg (NL)
(74) Representative: Peters, Sebastian Martinus
(86) International application number: PCT/NL2012/050342
(87) International publication number: WO 2012/158034

(56) References cited:
- DE-A1- 1 925 062
- DE-A1- 2 058 366
- FR-A- 1 325 802
- FR-A- 1 492 884

## Description

### BACKGROUND OF THE INVENTION

The invention relates to a device for supporting dough portions, also called product carriers, particularly during proofing of the dough.

The invention further relates to an assembly for dough treatment, particularly for proofing of dough.

European patent application 0 595 432 describes a product carrier comprising a frame having a cloth attached to various bars therein, wherein the bars extend within the frame between two opposing first sides. The cloth is furthermore permanently connected to two opposing second sides that are situated substantially transverse to the first sides. The frame is extendable from a first position, wherein the cloth sags between two bars and forms a trough, into a second extended position, wherein the cloth is stretched taut over the entire surface.

French patent 1.492.884 discloses a device for supporting dough portions according to the preamble of claim 1 and describes a frame, wherein the cloth is only attached to the bars, as a result of which the cloth can be stretched taut within a permanent frame. In this frame the bars are provided with round apertures at their outer ends, through which apertures a rod-shaped side section of the frame extends, as a result of which the bars are slidably attached to two opposing rod-shaped side sections of the frame. Between the bars also a spacer is placed on the rod-shaped side sections in order to limit bending in the first position, in which the cloth sags and forms a trough.

DE 2 058 366 discloses a device for supporting dough portions featuring a frame with recesses. A cloth is attached to two bars, one bar being fixed to the frame and the other bar is fixed to a rotating linkage, the shaft of which runs through the frame. By rotating the linkage towards their end points defined by the bar being positioned in the recesses, two different distances between the bars can be adjusted.

### SUMMARY OF THE INVENTION

It is an object of the invention to provide alternative devices for supporting dough portions, which preferably are easy to adjust for switching from first dough portions to second dough portions of other dimensions than the first dough portions, particularly having a another width substantially transverse to the longitudinal direction of the bars that carry the cloth.

According to a first aspect the invention for that purpose provides a device for supporting dough portions according to claim 1. Said device comprising:
a substantially rectangular frame,
a substantially rectangular cloth, and a number of bars that are attached to the cloth substantially parallel to each other and spaced apart from each other, wherein the bars extend substantially over the full distance between two opposing sides of the frame,
wherein the bars with their outer ends are movably coupled to the two opposing sides of the frame,
wherein two consecutive bars in a first condition of the device, in a first position are coupled to the frame at a mutual first distance between the two consecutive bars, wherein the mutual first distance is smaller than the length of the cloth extending between said bars,
wherein the two consecutive bars in a second condition of the device, in a second position are coupled to the frame at a mutual second distance between the two consecutive bars, wherein the mutual second distance substantially equals the length of the cloth extending between said bars,
wherein the frame on the two opposing sides is provided with a series of recesses that are open at the top for placing the outer ends of the two consecutive bars therein at the mutual first or second distance.

In a first condition of the device the cloth between the two consecutive bars will sag and form a trough for placing dough portions therein. In the second condition of the device the cloth will be stretched substantially taut between the two consecutive bars as a result of which the dough portions lie on top of the stretched cloth and can more easily be taken from the cloth. As the bars, both in the first condition and in the second condition have been placed in recesses, the position of the bars in the frame is thus secured. Particularly in the first condition the width of the trough is defined by the mutual first distance set between the bars. When placing dough portions in the device according to the invention the bars remain at the secured and set mutual first distance and the cloth will not sag further.

As the devices according to the state of the art use sliding bars, when placing dough portions on the cloth between two consecutive bars, said bars will move towards each other and the cloth will sag further. On the one hand this results in the cloth exerting a sideward pressure on the dough portions, which may be detrimental to the structure of the dough. On the other hand the position of the bars will shift because of this and this will have to be taken into account when placing other dough portions in the device, so that said other dough portions are placed correctly on the cloth between two consecutive bars.

According to the invention one or more of the bars are detachably placed in two opposing recesses of the frame, and at least one of the bars is detachably coupled to the frame. As a result the one or more detachably placed bars can be placed at different positions in the series of recesses, and the mutual distance between two consecutive bars can be adjusted to the dimensions and/or shape of the dough portions to be supported by the device.

In one embodiment the bars are detachably coupled to the frame. In that way the cloth with the bars can easily be removed from the frame in order to clean and/or replace the cloth and/or the bars.

In one embodiment on a first side of the frame placed transverse to the two opposing sides, the cloth is permanently connected to the frame. In one embodiment on a first side of the frame placed transverse to the two opposing sides, the cloth is permanently connected to an end bar, wherein the end bar is substantially location-fixedly connected to the frame. As the cloth is permanently connected to the first side of the frame, the cloth can be easily stretched into the second condition by engaging the cloth at an outer end facing away from the first side of the frame and subsequently moving said outer end away from the first side. Preferably prior to this action at least the movable bars are moved out of their recesses.

In one embodiment the outer ends of at least the movable bars are adapted for a lifting device engaging thereon for lifting at least the movable bars out of the recesses.

In one embodiment the series of recesses is adapted for placing at least the two consecutive bars in several different mutual first distances, wherein the cloth between the two consecutive bars sags and forms a trough. In one embodiment the series of recesses comprises several recesses within the length of the cloth between the two consecutive bars. In one embodiment the series of recesses comprises several regularly spaced apart recesses. As a result the mutual distance between the two consecutive bars, and thus the width of the trough and the extent of sagging of the cloth, can be set. In that way the mutual distance between the two consecutive bars can easily be adjusted to the shape of the dough portions. The device according to this embodiment is easy to adapt for switching from first dough portions to second dough portions of different dimensions than the first dough portions, particularly having another width substantially transverse to the longitudinal direction of the bars that carry the cloth.

In one embodiment each of the recesses debouches into an opening in the upper side of the frame, wherein the recesses are widened towards the opening. As at least near the opening in the upper side of the frame the recesses are widened, the rods can be placed more easily in the recesses of choice.

According to a second aspect the invention provides an assembly for dough treatment comprising a device for supporting dough portions as described above. Preferably the assembly comprises a proofing cabinet.

In one embodiment the assembly is furthermore provided with a lifting device for lifting the outer ends of at least the movable bars out of the recesses. In one embodiment the lifting device comprises a substantially straight guide that lifts the outer ends of at least the movable bars out of the recess to above an upper side of the two opposing sides, wherein the guide is adapted for carrying the outer ends of at least the movable bars and for guiding the outer ends of at least the movable bars along the guide at least during moving the bars from the first to the second position, or vice versa.

In one embodiment the assembly is further provided with a displacement device, wherein the displacement device comprises an engagement device for engaging one or more of the movable bars for moving the bars from the first to the second position, or vice versa.

In one embodiment the engagement device is adapted for engaging an outer end of the cloth extending away from the first side of the frame and/or for engaging a bar attached to or near the outer end of the cloth extending away from the first side of the frame.

In one embodiment the assembly is further provided with a removal device for removing the dough portions from the cloth, at least in the second condition of the device for supporting dough portions.

The aspects and measures described in this description and the claims of the application and/or shown in the drawings of this application may where possible also be used individually. Said individual aspects may be the subject of divisional patent applications relating thereto. This particularly applies to the measures and aspects that are described per se in the sub claims.

### SHORT DESCRIPTION OF THE DRAWINGS

The invention will be elucidated on the basis of a number of exemplary embodiments shown in the attached drawings, in which:
figures 1A and 1B show a top view and a side view of a product carrier according to the invention in a first condition,
figures 2A and 2B show a top view and a side view of the product carrier of figures 1A and 1B in a second condition,
figure 3A shows a detail view of a side with recesses according to a first exemplary embodiment in the first condition,
figure 3B shows a detail view of the side with recesses of figure 3A in the second condition,
figure 4A shows a detail view of a side with recesses according to a second exemplary embodiment in the first condition,
figure 4B shows a detail view of the side with recesses of figure 4A in the second condition,
figures 5A and 5B show a schematic side view and cross-section of an assembly comprising a product carrier in the first condition and a lifting device,
figures 6A and 6B show a schematic side view and cross-section of the assembly of figures 5A and 5B wherein the lifting device lifts at least the movable bars,
figures 7A and 7B show a schematic side view and cross-section of the assembly of figures 5A and 5B wherein at least the movable bars are moved to the second condition, and
figures 8A and 8B show a schematic side view and cross-section of the assembly of figures 5A and 5B wherein at least the movable bars are placed back in recesses of the frame in the second condition.

### DETAILED DESCRIPTION OF THE DRAWINGS

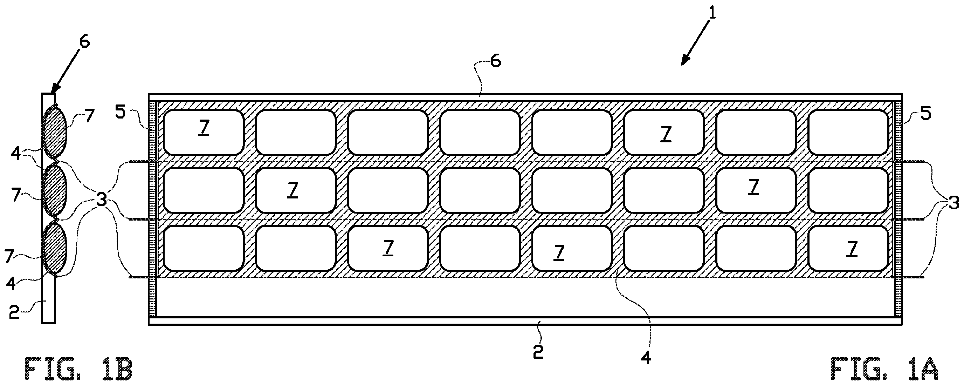

Figure 1A shows a top view of an exemplary embodiment of a device for supporting dough portions 1, also called product carrier 1, according to the invention. The product carrier 1 comprises a substantially rectangular frame 2. A number of bars 3 have been placed in the frame, which bars are attached substantially parallel to each other and spaced apart from each other to a substantially rectangular cloth 4. The bars then extend substantially over the full distance between two opposing sides 5 of the frame 2. On a first side 6 of the frame, placed substantially transverse to the two opposing sides 5, the flexible cloth 4 is furthermore permanently connected to the frame 2, preferably over the full length of the first side 6.

Figure 1A and 1B show the product carrier 1 in a first condition wherein two consecutive bars 3 are placed at a mutual distance that is smaller than the length of the cloth 4 situated between said two consecutive bars 3. As a result the flexible cloth 4, that is substantially inelastic, will sag between the two consecutive bars 3 and form a trough as schematically shown in the side view of figure 1B. In these troughs dough portions or dough pieces 7 can subsequently be placed as shown in figures 1A and 1B. In this position the dough portions are held in a stable position defined by the shape of the sagging cloth 4. The stable position of the dough portions 7 in this first condition of the product carrier 1 ensures that the dough is able to proof in a suitable manner without the process being disrupted by a movement of the dough portions.

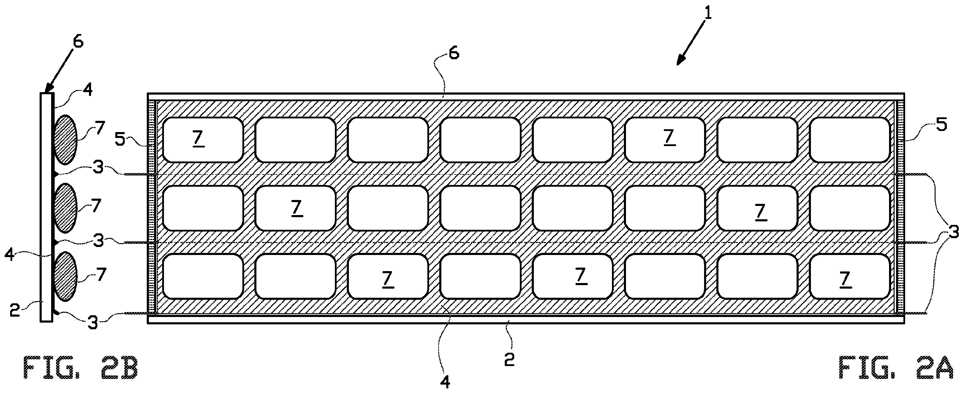

After the proofing process has been completed, the dough portions 7 are removed from the product carrier 1. Prior to removing the dough portions 7 from the product carrier 1, the bars 3 are moved into a second condition wherein the mutual distance between two consecutive bars 3 substantially equals the length of the cloth 4 extending between the two consecutive bars 3. As a result the cloth 4 will be stretched substantially taut between the two consecutive bars 3. As a result the dough portions 7 end up on top of the tautly stretched cloth 4 as shown in the side view of figure 2B. In this condition the dough portions can easily be removed from the cloth.

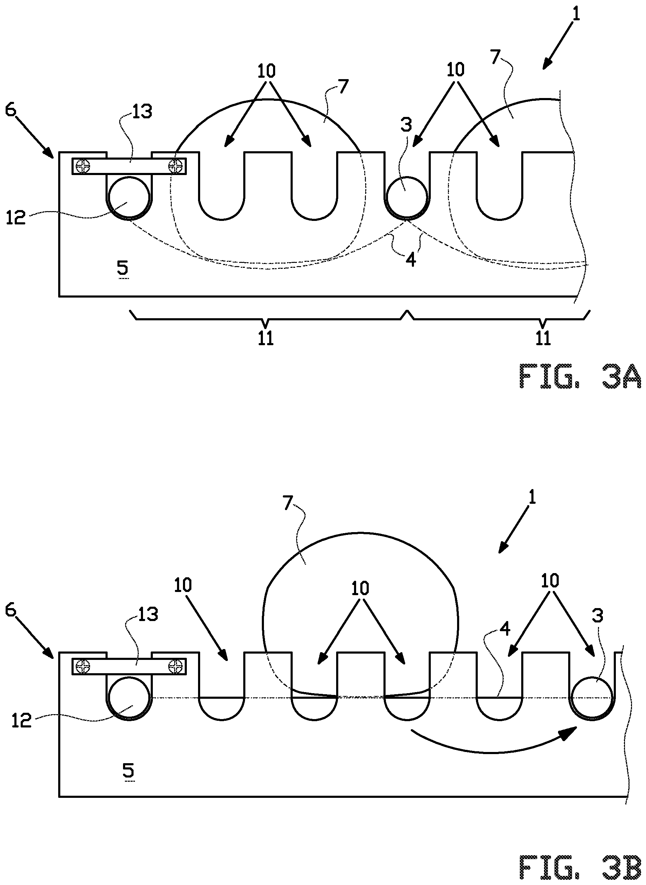

As shown in more detail in figures 3A and 3B, the two opposing sides 5 are provided with series of recesses 10 that in this exemplary embodiment are regularly spaced apart. The recesses 10 are open at the top for placing the outer ends of the bars 3 therein.

As the outer ends of the bars 3 have been placed in the recesses 10, the bars are coupled to the two opposing sides 5 of the frame in a substantially fixed position within the frame. The bars 3 can be moved out of the recesses 10, for instance by lifting the bars 3 out of the recesses 10, as will be described in more detail below, for moving the bars 3 out of a first recess to another second recess 10. In that way the distance between two consecutive bars 3 is adjustable. By adjusting this distance between the consecutive bars 3 the width of the trough 11 and the extent of sagging of the cloth 4 are determined.

In the exemplary embodiment of the product carrier 1 according to the invention as shown in figure 3A and 3B the cloth 4 on a first side 6 of the frame is permanently connected to an end bar 12 which is substantially permanently connected to the frame. In this embodiment the end bar 12 is placed in a recess the opening of which is closed off by means of confining body 13. Preferably the confining body 13 is connected to the frame by means of a detachable screwed connection, as a result of which also the end bar 12, after the confining body 13 has been removed, can be taken out of the frame together with the other bars 2 and the cloth 4.

Figure 3B shows the embodiment of figure 3A, wherein the at least movable bar 3 has been moved to another recess, such that the cloth 4 between the movable bar 3 and the end bar 12, is stretched substantially taut. In that way the dough portion 7 ends up on top of the tautly stretched cloth 4 as a result of which the dough portion can easily be removed for further treatment of the dough portion.

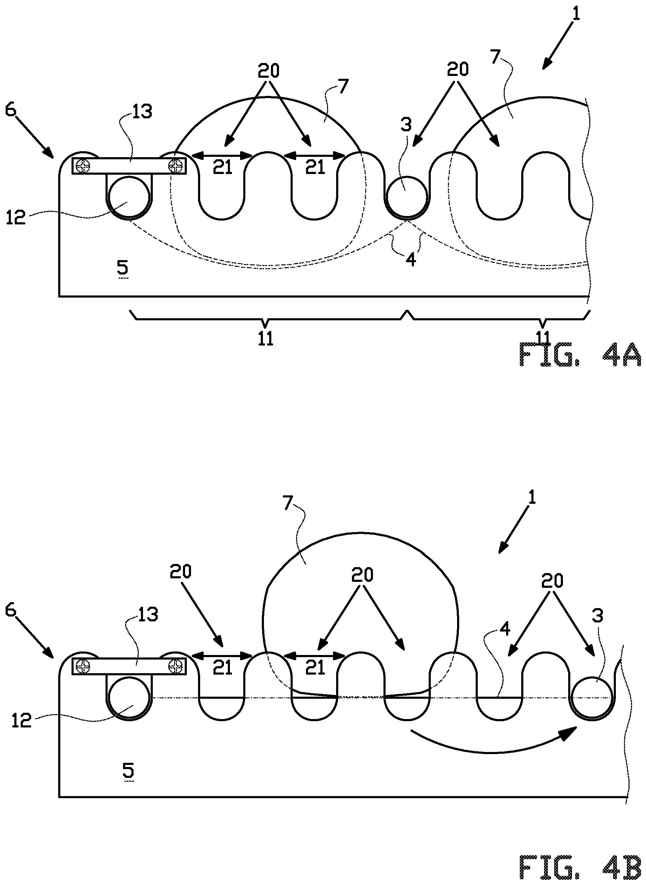

Figures 4A and 4B show a device comparable to the one in figures 3A and 3B, the difference being that this second exemplary embodiment is provided with recesses 20 that debouch in an opening 21 in the upper side of the two opposing sides 5 of the frame, wherein the recesses 20 have been widened towards the opening 21. If, when placing the bars 3 in the recess 20, the bars 3 are brought near the opening 21, the bars 3 will be guided to the recess 20 in question due to the shape of the opening 21.

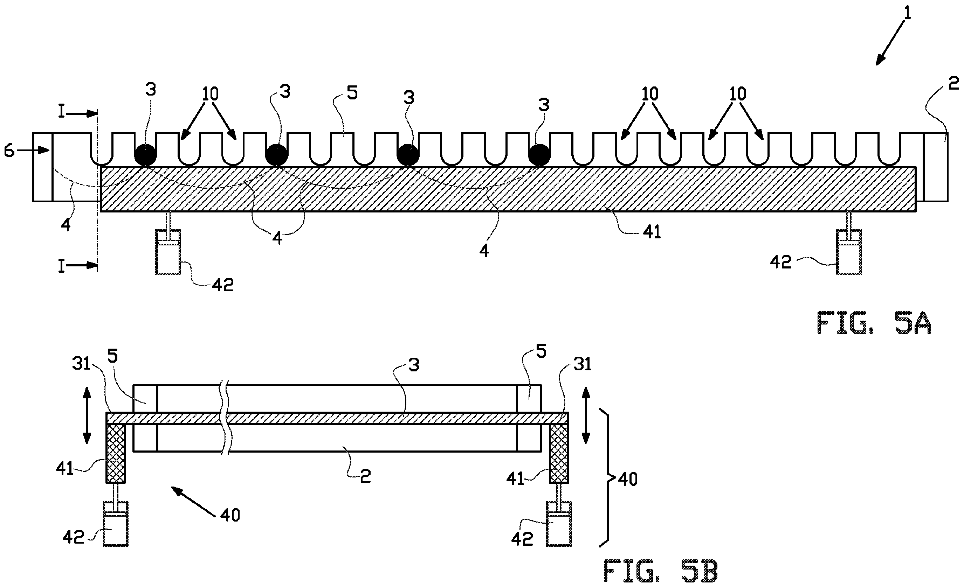

Figures 5, 6, 7 and 8 show an assembly of a product carrier and a lifting device, wherein the lifting device is adapted for lifting the at least movable bars 3 out of the recesses for moving the bars 3 from a first condition of the product carrier 1 into a second condition of the product carrier 1, or vice versa.

Figure 5A shows a product carrier 1 comprising a frame 2, on two opposing sides 5 provided with a series of regularly spaced apart recesses 10 for placing the outer ends of bars 3 therein, in between which bars a substantially rectangular cloth 4 extends. The bars 3 are attached to the cloth 4 substantially parallel to each other and spaced apart from each other. Furthermore the cloth 4 is permanently attached to the frame 2 on a first side 6.

Figure 5B shows a schematic view in cross-section along the line I-I of figure 5A. As shown in figure 5B the outer ends 31 of the bars 3 extend to beyond the opposing sides 5, as a result of which said outer ends 31 can be engaged by a lifting device 40 that is placed adjacent to the two opposing sides 5 of the frame 2. On each side of the two opposing sides 5 of the frame 2, the lifting device 40 is provided with a guide 41 that can be movably driven substantially in vertical direction by the cylinders 42.

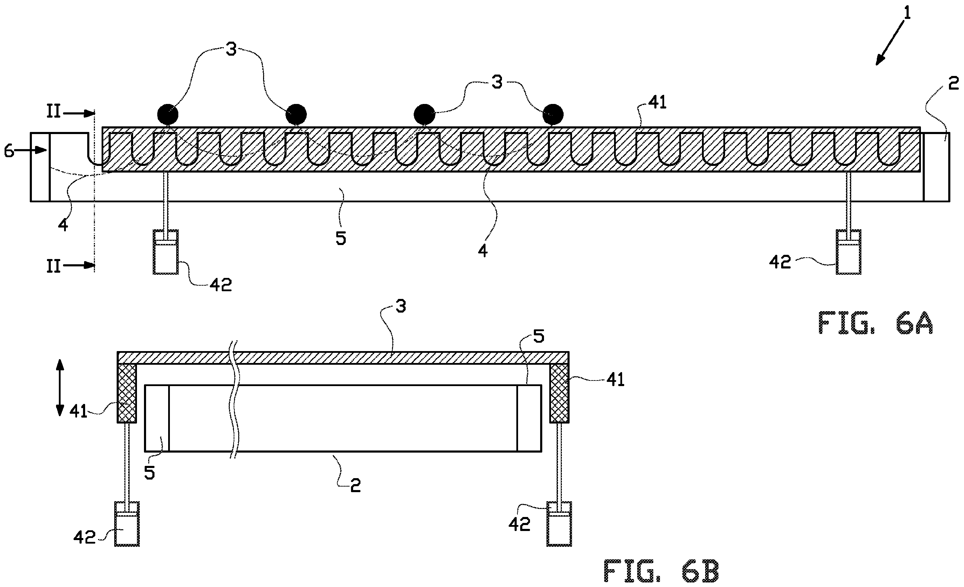

When moving the guide 41 upwards, the at least movable bars 3 will be lifted out of the recesses 10 by the guide 41 to above the two opposing sides 5 of the frame. The at least movable bars 3 are now situated on top of the substantially straight guide 41 and are movable along said guide 41, as shown in figures 6A and 6B, wherein figure 6B shows a schematic view in cross-section along the line II-II of figure 6A.

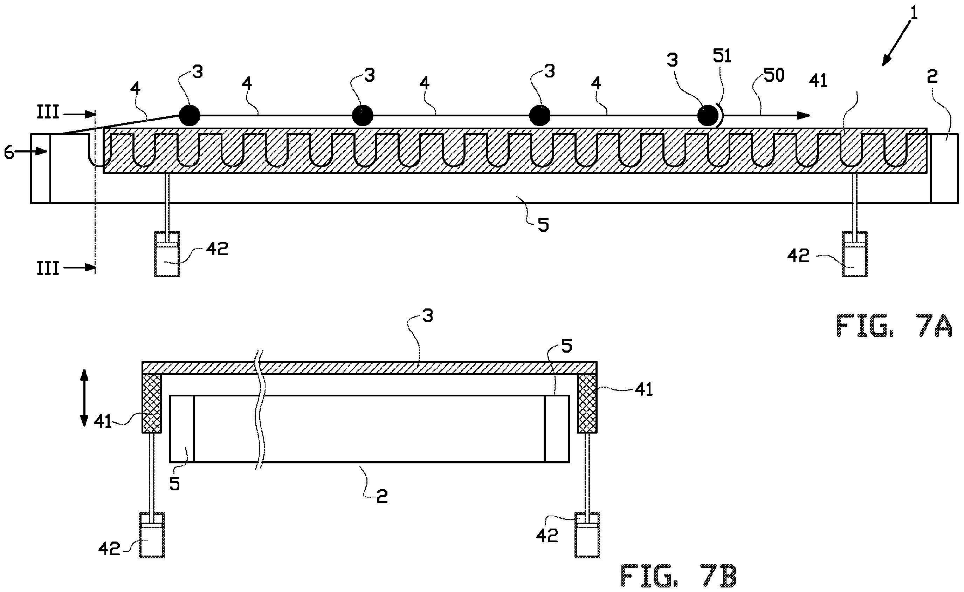

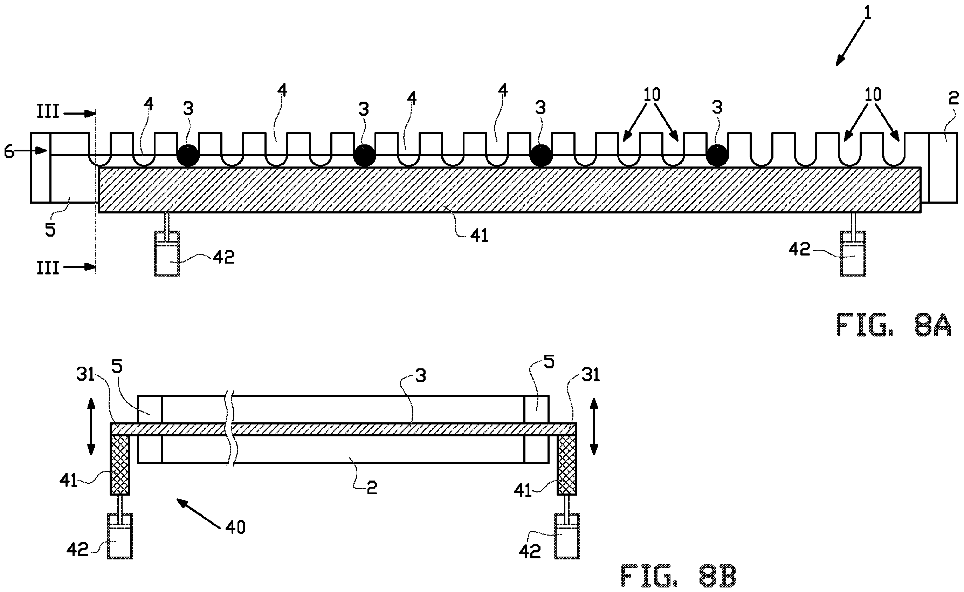

For moving the at least movable bars 3 from the first condition as shown in figure 5A to a second condition, as shown in figure 8A, the at least movable bars 3 are moved away from the first side 6. For that purpose the assembly comprises a displacement device having an engagement device 50 for engaging an outer end 51 of the cloth 4 extending away from the first side 6 of the frame 2. After the cloth 4 has been pulled taut by the engagement device 50, as shown in figure 7A, the lifting device 40 is able to lower the at least movable bars 3 into the new recesses 10 as shown in figure 8A. As a result the product carrier 1 has thus been brought into the second condition, in which the cloth 4 is stretched substantially taut for removing dough portions from the cloth 4.

Figure 7B shows a schematic view in cross-section along the line III-III of figure 7A, and figure 8B shows a schematic view in cross-section along the line IV-IV of figure 8A.

After the dough portions have been removed from the product carrier 1, the product carrier is transported further in the assembly for treating dough products, preferably in said second condition, to a cleaning station, wherein the cloth 4 is cleaned, for instance by brushes and/or a washing device. Subsequently the product carrier including cleaned cloth are passed back to the beginning of the device for dough treatment, and the substantially movable bars 3 are placed in a first condition as shown in figure 5A, after which the product carrier is ready for receiving dough portions again.

Summarising the invention thus relates to a product carrier for dough portions comprising: a frame, a cloth, a number of bars that are attached to the cloth substantially parallel to each other and spaced apart from each other. The bars extend over the full distance between two opposing sides of the frame. In a first condition two consecutive bars are coupled to the frame at a mutual first distance that is smaller than the length of the cloth between said bars, and in a second condition are coupled to the frame at a mutual second distance that substantially equals the length of the cloth between said bars. On the two opposing sides the frame is provided with series of recesses that are open at the top for placing the outer ends of the two consecutive bars therein, wherein at least one of the bars is detachably coupled to the frame.

The above description is included to illustrate the operation of preferred embodiments of the invention and not to limit the scope of the invention. Starting from the above explanation many variations that fall within the spirit and scope of the present invention will be evident to an expert.

## Claims

1. Device (1) for supporting dough portions (7) comprising:
a substantially rectangular frame (2),
a substantially rectangular cloth (4), and a number of bars (3) that are attached to the cloth (4) substantially parallel to each other and spaced apart from each other, wherein the bars (3) substantially extend over the full distance between two opposing sides (5) of the frame (2),
wherein the bars (3) with their outer ends are movably coupled to the two opposing sides (5) of the frame (2),
wherein two consecutive bars (3) in a first condition of the device (1) in a first position are coupled to the frame (2) at a mutual first distance between the two consecutive bars (3), wherein the mutual first distance is smaller than the length of the cloth (4) extending between said bars (3),
wherein the two consecutive bars (3) in a second condition of the device (1), in a second position are coupled to the frame (2) at a mutual second distance between the two consecutive bars (3), wherein the mutual second distance substantially equals the length of the cloth (4) extending between said bars (3),
**characterised in that** the frame (2) on the two opposing sides (5) is provided with a series of recesses (10, 20) that are open at the top for placing the outer ends of the two consecutive bars (3) therein at the mutual first or second distance, wherein one or more of the bars (3) is detachably placed in two opposing recesses (10, 20) of the frame (2), and wherein at least one of the bars (3) is detachably coupled to the frame (2).

2. Device according to claim 1, wherein the bars (3) are detachably coupled to the frame (2).

3. Device according to claim 1 or 2, wherein on a first side (6) of the frame (2) placed transverse to the two opposing sides (5), the cloth (4) is permanently connected to the frame (2).

4. Device according to claim 1 or 2, wherein on a first side (6) of the frame (2) placed transverse to the two opposing sides (5), the cloth (4) is permanently connected to an end bar (12), wherein the end bar (12) is substantially location-fixedly connected to the frame (2).

5. Device according to any one of the preceding claims, wherein the outer ends (31) of at least the movable bars (3) are adapted for a lifting device (40) engaging thereon for lifting at least the movable bars (3) out of the recesses (10, 20).

6. Device according to any one of the preceding claims, wherein the series of recesses (10, 20) is adapted for placing at least the two consecutive bars (3) in several different mutual first distances wherein the cloth (4) between the two consecutive bars (3) sags and forms a trough (11).

7. Device according to claim 6, wherein the series of recesses (10, 20) comprises several recesses within the length of the cloth (4) between the two consecutive bars (3).

8. Device according to any one of the preceding claims, wherein the series of recesses (10, 20) comprises several regularly spaced apart recesses (10, 20).

9. Device according to any one of the preceding claims, wherein each of the recesses (20) debouches in an opening in an upper side of the frame (2), wherein the recesses (20) are widened towards the opening (21).

10. Assembly for dough treatment comprising a device (1) for supporting dough portions (7) according to any one of the preceding claims.

11. Assembly according to claim 10, further comprising a lifting device (40) for lifting the outer ends (31) of at least the movable bars (3) out of the recesses (10, 20).

12. Assembly according to claim 11, wherein the lifting device (40) comprises a substantially straight guide (41) that lifts the outer ends (31) of at least the movable bars (3) out of the recess (10, 20) to above an upper side of the two opposing sides (5), wherein the guide (41) is adapted for carrying the outer ends (31) of at least the movable bars (3) and for guiding the outer ends (31) of at least the movable bars (3) along the guide (41) at least during moving the bars (3) from the first to the second position, or vice versa.

13. Assembly according to claim 11 or 12, further provided with a displacement device (50, 51), wherein the displacement device comprises an engagement device (50) for engaging one or more of the movable bars (3) for moving the bars (3) from the first to the second position, or vice versa.

14. Assembly according to claim 13, when depending on claim 3 or 4, wherein the engagement device (50, 51) is adapted for engaging an outer end (51) of the cloth (4) extending away from the first side (6) of the frame (2) and/or for engaging a bar (3) attached to or near the outer end (51) of the cloth (4) extending away from the first side (6) of the frame (2).

15. Assembly according to claim 10-14, further provided with a removal device for removing the dough (7) portions from the cloth (4), at least in the second condition of the device (1) for supporting dough portions (7).

## Patentansprüche

1. Vorrichtung (1) zur Unterstützung von Teigportionen (7), umfassend:
einen im Wesentlichen rechtwinkligen Rahmen (2),
ein im Wesentlichen rechtwinkliges Tuch (4), und eine Anzahl von Stäben (3), die an dem Tuch (4) im Wesentlichen parallel zueinander und voneinander beabstandet angebracht sind, wobei sich die Stäbe (3) im Wesentlichen über den kompletten Abstand zwischen den zwei gegenüberliegenden Seiten (5) des Rahmens (2) erstrecken,
wobei die Stäbe (3) mit ihren äußeren Enden beweglich an die zwei gegenüberliegenden Seiten (5) des Rahmens (2) gekoppelt sind,
wobei zwei aufeinander folgende Stäbe (3) in einem ersten Zustand der Vorrichtung (1) in einer ersten Position mit einem beiderseitigen ersten Abstand zwischen den zwei aufeinander folgenden Stäben (3) an den Rahmen (2) gekoppelt sind, wobei der beiderseitige erste Abstand kleiner als die Länge des Tuchs (4) ist, das sich zwischen den Stäben (3) erstreckt,
wobei die zwei aufeinander folgenden Stäbe (3) in einem zweiten Zustand der Vorrichtung (1) in einer zweiten Position mit einem beiderseitigen zweiten Abstand zwischen den zwei aufeinander folgenden Stäben (3) an den Rahmen (2) gekoppelt sind, wobei der beiderseitige zweite Abstand im Wesentlichen gleich der Länge des Tuchs (4) ist, das sich zwischen den Stäben (3) erstreckt,
**dadurch gekennzeichnet, dass** der Rahmen (2) an den zwei gegenüberliegenden Seiten (5) mit einer Reihe von Aussparungen (10, 20) versehen ist, die an der Oberseite offen sind, um die äußeren Enden der zwei aufeinander folgenden Stäbe (3) darin mit dem beiderseitigen ersten oder zweiten Abstand zu platzieren, wobei einer oder mehrere der Stäbe (3) in zwei gegenüberliegenden Aussparungen (10, 20) des Rahmens (2) abnehmbar angeordnet ist, und wobei mindestens einer der Stäbe (3) abnehmbar an den Rahmen (2) gekoppelt ist.

2. Vorrichtung nach Anspruch 1, wobei die Stäbe (3) abnehmbar an den Rahmen (2) gekoppelt sind.

3. Vorrichtung nach Anspruch 1 oder 2, wobei an einer ersten Seite (6) des Rahmens (2), der quer zu den zwei gegenüberliegenden Seiten (5) angeordnet ist, das Tuch (4) permanent mit dem Rahmen (2) verbunden ist.

4. Vorrichtung nach Anspruch 1 oder 2, wobei an einer ersten Seite (6) des Rahmens (2), der quer zu den zwei gegenüberliegenden Seiten (5) angeordnet ist, das Tuch (4) permanent mit einem Endstab (12) verbunden ist, wobei der Endstab (12) im Wesentlichen örtlich fixiert mit dem Rahmen (2) verbunden ist.

5. Vorrichtung nach einem der vorhergehenden Ansprüche, wobei die äußeren Enden (31) mindestens der beweglichen Stäbe (3) für eine Hebeeinrichtung (40) angepasst sind, die auf diesen eingreift, um mindestens die beweglichen Stäbe (3) aus den Aussparungen (10, 20) zu heben.

6. Vorrichtung nach einem der vorhergehenden Ansprüche, wobei die Reihe von Aussparungen (10, 20) angepasst ist, mindestens die zwei aufeinander folgenden Stäbe (3) in mehreren verschiedenen ersten Abständen anzuordnen, wobei das Tuch (4) zwischen den zwei aufeinander folgenden Stäben (3) durchhängt und eine Mulde (11) ausbildet.

7. Vorrichtung nach Anspruch 6, wobei die Reihe von Aussparungen (10, 20) mehrere Aussparungen innerhalb der Länge des Tuchs (4) zwischen den zwei aufeinander folgenden Stäben (3) umfasst.

8. Vorrichtung nach einem der vorhergehenden Ansprüche, wobei die Reihe der Aussparungen (10, 20) mehrere regelmäßig beabstandete Aussparungen (10, 20) umfasst.

9. Vorrichtung nach einem der vorhergehenden Ansprüche, wobei jede der Aussparungen (20) in eine Öffnung an einer oberen Seite des Rahmens (2) hineinläuft, wobei sich die Aussparungen (20) in Richtung der Öffnung (21) weiten.

10. Anordnung zur Teigbehandlung, die eine Vorrichtung (1) zur Unterstützung von Teigportionen (7) nach einem der vorhergehenden Ansprüche umfasst.

11. Anordnung nach Anspruch 10, die überdies eine Hebeeinrichtung (40) zum Heben der äußeren Enden (31) mindestens der beweglichen Stäbe (3) aus den Aussparungen (10, 20) umfasst.

12. Anordnung nach Anspruch 11, wobei die Hebeeinrichtung (40) eine im Wesentlichen gerade Führung (41) umfasst, die die äußeren Enden (31) mindestens der beweglichen Stäbe (3) aus der Aussparung (10, 20) über eine obere Seite der zwei gegenüberliegenden Seiten (5) hebt, wobei die Führung (41) angepasst ist, die äußeren Enden (31) mindestens der beweglichen Stäbe (3) zu tragen und die äußeren Enden (31) mindestens der beweglichen Stäbe (3) entlang der Führung (41) mindestens während des Bewegens der Stäbe (3) von der ersten in die zweite Position zu tragen, oder umgekehrt.

13. Anordnung nach Anspruch 11 oder 12, die überdies mit einer Verschiebeeinrichtung (50, 51) versehen ist, wobei die Verschiebeeinrichtung eine Greifeinrichtung (50) umfasst, um einen oder mehreren der beweglichen Stäbe (3) zu greifen, um die Stäbe (3) von der ersten in die zweite Position zu bewegen, oder umgekehrt.

14. Anordnung nach Anspruch 13, wenn dieser von Anspruch 3 oder 4 abhängt, wobei die Greifeinrichtung (50, 51) angepasst ist, einem äußeren Ende (51) des Tuchs (4), das sich von der ersten Seite (6) des Rahmens (2) wegstreckt, zu greifen, und/oder einen Stab (3), der an dem oder in der Nähe des äußeren Endes (51) des Tuchs (4), das sich von der ersten Seite (6) des Rahmens (2) hinweg erstreckt, befestigt ist, zu greifen.

15. Anordnung nach Anspruch 10 bis 14, die überdies mit einer Entnahmeeinrichtung zum Entnehmen der Teigportionen (7) aus dem Tuch (4) versehen ist, mindestens in dem zweiten Zustand der Einrichtung (1) zur Unterstützung von Teigportionen (7).

## Revendications

1. Dispositif (1) pour supporter des portions de pâte (7) comprenant :
un bâti sensiblement rectangulaire (2),
un tissu sensiblement rectangulaire (4), et un certain nombre de barres (3) qui sont fixées au tissu (4) de manière sensiblement parallèle entre elles et espacées les unes des autres, dans lequel les barres (3) s'étendent sensiblement sur toute la distance entre deux côtés (5) opposés du bâti (2),
dans lequel les barres (3) avec leurs extrémités externes sont couplées de manière mobile aux deux côtés (5) opposés du bâti (2),
dans lequel les deux barres (3) consécutives dans une première condition du dispositif (1) dans une première position, sont couplées au bâti (2) à une première distance mutuelle entre les deux barres (3) consécutives, dans lequel la première distance mutuelle est inférieure à la longueur du tissu (4) s'étendant entre lesdites barres (3),
dans lequel les deux barres (3) consécutives dans une seconde condition du dispositif (1), dans une seconde position, sont couplées au bâti (2) à une seconde distance mutuelle entre les deux barres (3) consécutives, dans lequel la seconde distance mutuelle égale sensiblement la longueur du tissu (4) s'étendant entre lesdites barres (3),
**caractérisé en ce que** le bâti (2) sur les deux côtés (5) opposés est prévu avec une série d'évidements (10, 20) qui sont ouverts au sommet pour placer les extrémités externes des deux barres (3) consécutives à l'intérieur de ces derniers à une première ou seconde distance mutuelle, dans lequel une ou plusieurs des barres (3) sont placées de manière détachable dans deux évidements (10, 20) opposés du bâti (2), et dans lequel au moins l'une des barres (3) est couplée au bâti (2).

2. Dispositif selon la revendication 1, dans lequel les barres (3) sont couplées, de manière détachable, au bâti (2).

3. Dispositif selon la revendication 1 ou 2, dans lequel, sur un premier côté (6) du bâti (2) placé transversalement par rapport aux deux côtés (5) opposés, le tissu (4) est raccordé de manière permanente au bâti (2).

4. Dispositif selon la revendication 1 ou 2, dans lequel, sur un premier côté (6) du bâti (2) placé transversalement par rapport aux deux côtés (5) opposés, le tissu (4) est raccordé, de manière permanente, à une barre d'extrémité (12), dans lequel la barre d'extrémité (12) est raccordée, de manière sensiblement fixe du point de vue de l'emplacement, au bâti (2).

5. Dispositif selon l'une quelconque des revendications précédentes, dans lequel les extrémités externes (31) d'au moins les barres mobiles (3) sont adaptées pour un dispositif de levage (40) se mettant en prise sur ces dernières pour lever au moins les barres mobiles (3) hors des évidements (10, 20).

6. Dispositif selon l'une quelconque des revendications précédentes, dans lequel la série d'évidements (10, 20) est adaptée pour placer au moins les deux barres (3) consécutives dans plusieurs premières distances mutuelles différentes, dans lequel le tissu (4) entre les deux barres (3) consécutives se baisse et forme un creux (11).

7. Dispositif selon la revendication 6, dans lequel la série d'évidements (10, 20) comprend plusieurs évidements dans la longueur du tissu (4) entre les deux barres (3) consécutives.

8. Dispositif selon l'une quelconque des revendications précédentes, dans lequel la série d'évidements (10, 20) comprend plusieurs évidements (10, 20) espacés de manière régulière.

9. Dispositif selon l'une quelconque des revendications précédentes, dans lequel chacun des évidements (20) débouche dans une ouverture dans un côté supérieur du bâti (2), dans lequel les évidements (20) sont élargis vers l'ouverture (21).

10. Ensemble pour traiter une pâte comprenant un dispositif (1) pour supporter des portions de pâte (7) selon l'une quelconque des revendications précédentes.

11. Ensemble selon la revendication 10, comprenant en outre un dispositif de levage (40) pour lever les extrémités externes (31) d'au moins les barres mobiles (3) hors des évidements (10, 20).

12. Ensemble selon la revendication 11, dans lequel le dispositif de levage (40) comprend un guide (41) sensiblement droit qui lève les extrémités externes (31) d'au moins les barres mobiles (3) hors de l'évidement (10, 20) jusqu'au-dessus d'un côté supérieur des deux côtés (5) opposés, dans lequel le guide (41) est adapté pour porter les extrémités externes (31) d'au moins les barres mobiles (3) et pour guider les extrémités externes (31) d'au moins les barres mobiles (3) le long du guide (41) au moins pendant le passage des barres (3) de la première à la seconde position, ou vice versa.

13. Ensemble selon la revendication 11 ou 12, prévu en outre avec un dispositif de déplacement (50, 51), dans lequel le dispositif de déplacement comprend un dispositif de mise en prise (50) pour mettre en prise une ou plusieurs des barres mobiles (3) pour faire passer les barres (3) de la première à la seconde position, ou vice versa.

14. Ensemble selon la revendication 13, lorsqu'elle dépend de la revendication 3 ou 4, dans lequel le dispositif de mise en prise (50, 51) est adapté pour mettre en prise une extrémité externe (51) du tissu (4) s'étendant à distance du premier côté (6) du bâti (2) et/ou pour mettre en prise une barre (3) fixée sur ou à proximité de l'extrémité externe (51) du tissu (4) s'étendant à distance du premier côté (6) du bâti (2).

15. Ensemble selon les revendications 10 à 14, prévu en outre avec un dispositif de retrait pour retirer les portions de pâte (7) du tissu (4), au moins dans la seconde condition du dispositif (1) pour supporter les portions de pâte (7).
